# FASCICULE DE BREVET EUROPEEN

(11) **EP 0 572 719 B1**
(45) Date de publication et mention de la délivrance du brevet: **09.10.1996**
(21) Numéro de dépôt: 92120678.5
(22) Date de dépôt: 03.12.1992
(51) Int. Cl.: B23H 7/10

(54) **Machine d'électroérosion avec circuit amélioré pour le déroulement du fil-electrode**
Elektroerosive Maschine mit verbessertem Kreislauf zum Abwickeln des Elektrodendrahtes
Electro-erosion machine with an improved circuit for unwinding the electrode wire

(30) Priorité: 30.05.1992 EP 92201547
(43) Date de publication de la demande: 08.12.1993
(73) Titulaire: CHARMILLES TECHNOLOGIES S.A., 1217 Meyrin 1 (CH)
(72) Inventeur: Gambin, Rémi, F-74100 Vetraz-Monthoux (FR); Matter, Daniel, CH-1219 Aire (CH)

(56) Documents cités:
- WO-A-88/03454
- DE-A- 3 706 490

## Description

La présente invention concerne une machine à aspersion pour découper par électroérosion avec un fil-électrode, dans laquelle le liquide diélectrique d'usinage est injecté dans la zone d'usinage depuis deux têtes d'usinage, recueilli dans un bac, puis recyclé vers ces têtes.

Les machines à aspersion pour découper par électroérosion avec un fil-électrode connues sont le plus souvent constituées par une table de travail sur laquelle est fixée la pièce à usiner ainsi que son système de bridage, le tout plongé dans un bac d'usinage recueillant le liquide diélectrique d'usinage. Le fil-électrode défile entre deux têtes d'usinage et passe à travers la zone d'usinage, c'est-à-dire la fente découpée dans la pièce à usiner. Il s'avance dans celle-ci selon la trajectoire prévue grâce à un mouvement relatif entre les deux électrodes et peut aussi simultanément s'incliner par rapport à la verticale, selon un profil prédéterminé. Ces deux têtes d'usinage sont situées de part et d'autre de la pièce à usiner , comportent des guides-fil et injectent du liquide d'usinage entre les électrodes afin de les refroidir et d'éliminer les déchets. Ce mouvement relatif est réalisé en déplaçant soit la pièce à usiner, soit la tête d'usinage inférieure, et l'inclinaison du fil en déplaçant aussi la tête d'usinage supérieure de manière à la décaler par rapport à la tête d'usinage inférieure. Ces déplacements s'effectuent en général dans deux plans horizontaux, de part et d'autre de la zone d'usinage, grâce à deux systèmes à mouvements croisés.
A sa sortie de la tête d'usinage inférieure, le fil est entraîné hors du bac de travail par des moyens appropriés, à travers le bras inférieur portant celle-ci, vers un réceptacle pour fil usé disposé en général vers l'arrière du bâti de la machine. En effet, le socle du bâti est traditionnellement occupé par un réservoir dans lequel on vidange et recycle le liquide diélectrique d'usinage. Les organes composant le système d'évacuation du fil varient selon les constructeurs. Leur influence sur la fréquence de rupture du fil et sur la précision et la reproductibilité de l'usinage est bien connue, en particulier par leur action sur la tension mécanique et la flêche du fil, la régularité de sa vitesse de défilement et l'importance des vibrations qui peuvent être induites dans ce fil. Ils ont aussi une grande importance pour la sécurité offerte par la machine, car le fil est sous tension électrique lorsqu'il débouche de la tête d'usinage inférieure.

L' objet de la présente invention est donc la création d'une machine à découper par électroérosion ne présentant aucun des inconvénients inhérents à l'évacuation du fil usé et rendant possible l'usinage avec un fil-électrode fortement tendu (pour réduire sa flêche et augmenter la précision et la vitesse d'usinage, etc...).

A cet effet, la machine d'électroérosion à fil, en aspersion, sans bac d'usinage et sans table de travail proprement dite, selon la présente invention, comporte
- un bâti avec un socle composé d'éléments verticaux disposés de façon à délimiter un espace ouvert vers la zone d'usinage, la pièce à usiner et son système de bridage étant montés au-dessus de cet espace, sur des piliers fixés directement sur ces éléments, sans l'intermédiaire d'un bac et d'une table de travail et
- une tête d'usinage inférieure munie de deux galets destinés à pincer et entrainer le fil, et de deux roulettes dentées rotatives entre lesquelles défile le fil, agencées pour friser le fil à sa sortie des deux galets,
   le fil usé, à la sortie de cette tête d'usinage inférieure, pénètrant directement dans l'espace délimité par les éléments du socle qui fait office de réceptacle.

Le fil est ainsi évacué sous la zone d'usinage et il n'est plus nécessaire de prévoir un système de courroies ou de fluide comprimé pour le transporter vers l'arrière de la machine. Il n'y a ainsi plus aucun risque de patinage des courroies ni d'usure importante dans le cas où le fil est fortement tendu.

De plus, un bac destiné à recueillir le liquide diélectrique d'usinage ainsi, le cas échéant, que les chutes découpées dans la pièce à usiner, peut être disposé au fond ou autour du socle; il fait ainsi office de "bac sale". Dans ce cas, le fil usé vient alors s'accumuler dans le liquide d'aspersion "sale" recueilli à la base du socle; dans le cas où le fil n'est pas sectionné à la sortie de la zone d'usinage, la longueur de fil usé se refroidit au contact du liquide et ce refroidissement se transmet à la section défilant à travers la zone d'usinage , diminuant ainsi le risque de rupture du fil.
Selon la présente invention, on a ainsi une structure plus rigide et plus simple et présentant moins d'encombrement : tout l'espace compris entre la surface des piliers de bridage et la tête d'usinage supérieure peut être occupé par la pièce à usiner. Il n'y a aucun obstacle latéral sur trois côtés. Ainsi, pour une taille donnée de la machine, on peut usiner des pièces beaucoup plus hautes, larges et longues (et beaucoup plus lourdes) qu'avec les machines connues de dimensions similaires.
Ce type de circuit d'évacuation pour fil électrode peut avantageusement être utilisé sur les machines rigides et thermostables, avec ou sans cabine.
La fig. 1 est un schéma simplifié de la face frontale d'une machine selon la présente invention;
la fig. 2 montre certains des organes d'une tête inférieure pour une machine selon la présente invention.

Les mêmes chiffres de référence sont utilisés dans ces deux figures pour désigner les mêmes organes.

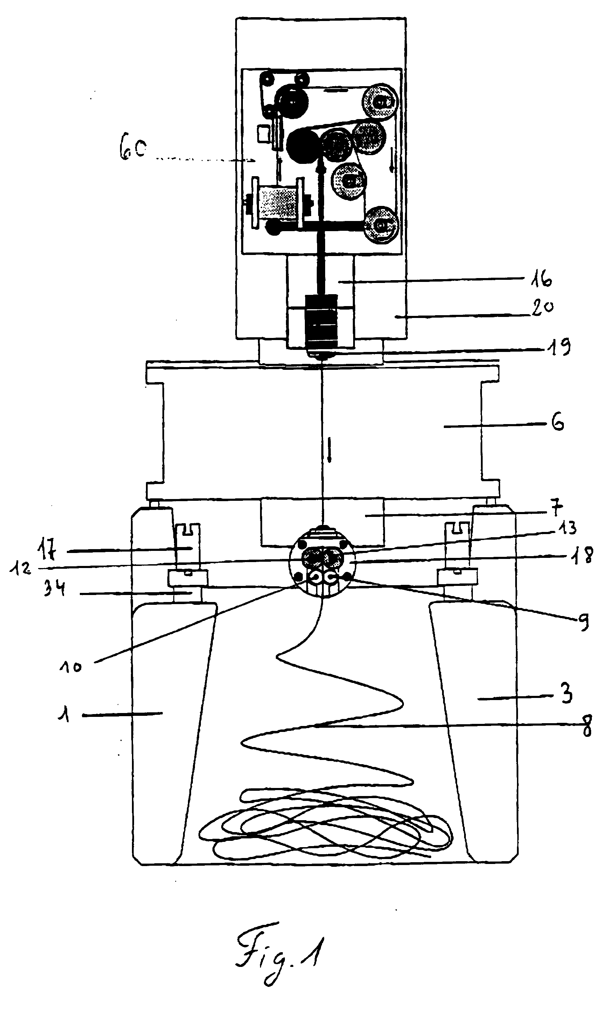

Le bâti de la machine selon la présente invention représentée au dessin comprend un socle constitué par trois parois perpendiculaires dont deux, 1 et 3 , sont visibles au dessin. Ces parois 1 et 3 présentent chacune un épaulement sur lequel s'appuie la traverse 6. Elles sont reliées par une paroi moins haute, de manière à ménager un espace suffisant pour le système à mouvements croisés 7 actionnant le bras inférieur portant la tête 18.
Ce socle est réalisé en Rhenocast (R) (une marque de la société George Fischer désignant un béton polymère). Ce matériau inaltérable, insensible à la rouille, isolant thermique et électrique, est approprié à cet usage, car le socle est destiné à être au contact du diélectrique usé et du fil-électrode sortant, encore sous charge électrique, de la tête d'usinage inférieure 18. Sa densité n'est que le tiers de celle de l'acier pour un coefficient de dilatation thermique comparable: 12µm/degré/mn. Ce socle pourrait toutefois être réalisé en tout autre matériau connu pour cet usage: fonte, acier soudé, béton hydraulique, céramique, etc...
Le bras supérieur (non visible à la fig. 1) porte un élément vertical 16 contenant un dispositif 20 de type connu et dont seul l'habillage est visible à la fig. 1, faisant coulisser la tête d'usinage supérieure 19 le long d'une crémaillère disposée selon l'axe Z.
Cet élément vertical 16 supporte également les divers organes d'alimentation en fil-électrode (plaque 60).
La traverse 6 et les coulisseaux des mouvements croisés sont en fonte. Ils pourraient toutefois être réalisés en tout autre matériau connu pour cet usage: acier soudé, céramique, etc...
Deux piliers 17 en granit sont fixés grâce à six organes 34 sur la face supérieure des parois 1 et 3 situées en contrebas des épaulements. Ils présentent un rail apte à recevoir les éléments d'un système de bridage de types connu.

Une paroi protectrice, transparente et mobile (non visible à la fig. 1) referme latéralement l'espace dans lequel s'accumule le fil usé 8.
Les têtes d'usinage 18 et 19 peuvent prendre n'importe quelle position relativement à la pièce à usiner, indépendemment l'une de l'autre; il est possible d'incliner le fil jusqu'à 30° dans une pièce de 400 mm de hauteur.

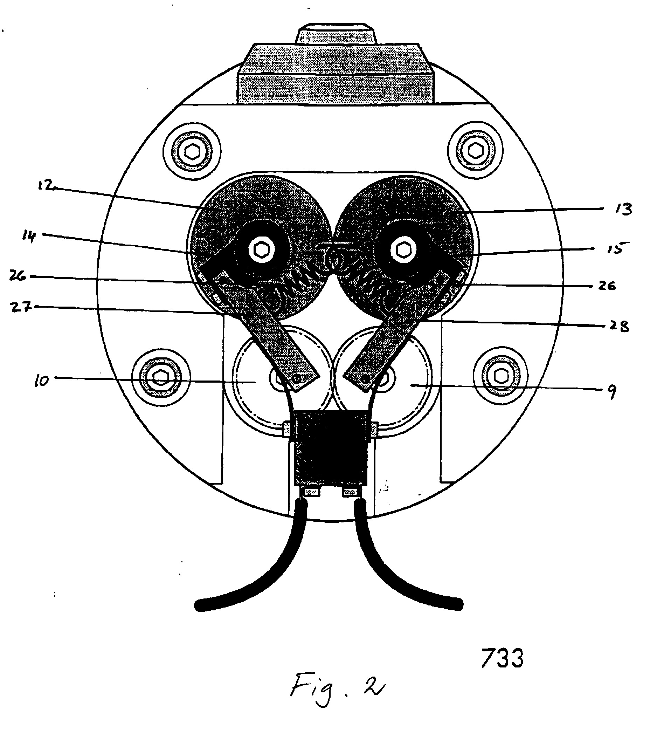

Un moteur (non visible à la figure 2) entraine les deux galets 12 et 13 destinés à pincer et tirer le fil 8. Leur pression sur le fil 8 est réglable en fonction du diamètre de ce dernier grâce à un système à ressort de type connu (non visible à la figure 2); la tension de ce ressort est modifiable en manoeuvrant une vis.

La vitesse de défilement est programmable avec précision, de manière connue .
Comme expliqué à la figure 2, les deux organes 12 et 13 font office à la fois de guide-fil et de contacts amenant le courant électrique au fil 8. Le courant leur est transmis par les deux balais 14 et 15 venant s'appuyer sur leur axe de rotation grâce aux leviers 27 et 28 à ressorts 26. Ces derniers contribuent aussi au bon contact entre les galets 12 et 13 et le fil 8.

Les deux roulettes dentées 9 et 10 sont destinées à friser le fil. Toutefois leur section centrale présente une concavité qui permet au fil-électrode de glisser entre elles avec un jeu latéral. Ainsi, lorsque la vitesse du fil est un peu trop grande par rapport à leur vitesse de rotation, il glisse latéralement et remonte sur l'un des bords de cette courbe. En cas contraire, il défile au milieu. Cette concavité permet donc une autorégulation de la vitesse de défilement du fil. Ceci est très avantageux , car il n'est plus nécessaire de synchroniser avec précision la vitesse de rotation de ces roulettes 9 et 10 avec la vitesse du fil à la sortie des galets 12 et 13. On évite ainsi avantageusement d'avoir par exemple à démonter la ou les poulies entrainant ces roulettes et d'en remonter de diamètre différent, le diamètre de ces dernières devant être adapté à cette vitesse de rotation.

## Revendications

1. Machine d'électroérosion à fil, sans bac d'usinage et sans table de travail, présentant un bâti avec un socle composé d'éléments verticaux (1,3) disposés de façon à délimiter un espace ouvert vers la zone d'usinage, la pièce à usiner et son système de bridage étant montés au-dessus de cet espace, sur des piliers (17) fixés directement sur ces éléments (1,3), sans l'intermédiaire d'un bac et d'une table de travail, comportant une tête d'usinage supérieure, (19) et une tête d'usinage inférieure (18) caracterisée par un système d'évacuation du fil (8) simplifié comportant deux galets (12,13) destinés à pincer et entrainer le fil, et deux roulettes dentées (9,10) rotatives entre lesquelles défile le fil (8) agencées pour friser le fil à sa sortie des deux galets, (12,13) pénètrant directement dans le réceptacle.

2. Machine selon la revendication 1, dans laquelle le bras portant la tête d'usinage inférieure (18) est horizontal.

3. Machine selon la revendication 1, dans laquelle la section centrale de ces deux roulette (12,13) comporte une concavité pour autoréguler le défilement du fil (8) entre elles en lui permettant de glisser latéralement par rapport à la direction du défilement lorsque sa vitesse à la sortie des galets n'est pas synchronisée avec précision avec la vitesse de rotation de ces roulettes.

4. Machine selon la revendication 1, dans laquelle la pression de ces deux galets (12,13) sur le fil (8) est réglable en fonction du diamètre de ce fil (8).

5. Machine selon la revendication 1, dans laquelle la vitesse de rotation de ces deux galets (12,13) est programmable et asservie avec précision.

6. Machine selon la revendication 1, dans laquelle ces deux galets (12,13) sont agencés pour faire office de guide-fil.

7. Machine selon la revendication 1, dans laquelle ces deux galets sont agencés pour faire office de contacts amenant le courant électrique au fil (8).

## Claims

1. Electric discharge machine, without a machining tank and without a machine table, having a frame with a base made up of vertical elements (1, 3) arranged in order to delimit a space open towards the machining zone, the workpiece and its clamping system being mounted above this space, on the pillars (17) fixed directly onto these elements (1, 3) without the intermediary of a tank and a machine table, comprising an upper machining head (19) and a lower machining head (18), characterised by a simplified wire disposal system comprising two rollers (12, 13) intended to grip and move the wire, and two rotating toothed wheels (9, 10) between which the wire (8) is passed arranged to curl the wire on leaving the two rollers (12, 13) passing directly into the receptacle.

2. Machine in accordance with claim 1, in which the arm supporting the lower machining head (18) is horizontal.

3. Machine in accordance with claim 1, in which the central section of the two wheels (12, 13) comprises a cavity for automatically controlling the passage of the wire (8) between them, allowing it to slide laterally with respect to the direction of the movement when its speed on leaving the rollers is not precisely synchronised with the speed of the rotation of the wheels.

4. Machine in accordance with claim 1, in which the pressure of the two rollers (12, 13) on the wire (8) is controllable according to the diameter of the wire (8).

5. Machine in accordance with claim 1, in which the speed of rotation of the two rollers (12, 13) is programmable and controlled with precision.

6. Machine in accordance with claim 1, in which the two rollers (12, 13) are arranged to act as a wire guide.

7. Machine in accordance with claim 1, in which the two rollers are arranged to act as contacts carrying the electric current to the wire (8).

## Patentansprüche

1. Draht-Elektroerosionsmaschine ohne Arbeitsbecken und ohne Arbeitstisch, mit einem Rahmen mit einem Sockel aus Vertikalelementen (1, 3), die derart angeordnet sind, daß sie einen in Richtung der Bearbeitungszone geöffneten Raum begrenzen, wobei das zu bearbeitende Werkstück und dessen Spannsystem oberhalb dieses Raumes ohne dazwischen angeordneten Behälter und ohne dazwischen angeordneten Arbeitstisch an direkt an diesen Elementen (1, 3) festgelegten Stützen (17) befestigt sind, wobei die Maschine einen oberen Arbeitskopf (19) und einen unteren Arbeitskopf (18) aufweist, gekennzeichnet durch ein vereinfachtes System zum Entfernen des Drahtes (8), welches zwei zum Einklemmen und Antreiben des Drahtes dienende Rollen (12, 13) und zwei sich drehende Zahnwalzen (9, 10) aufweist, zwischen denen der Draht (8) durchläuft und die zum Wellen des direkt in das Sammelbecken gelangenden Drahtes an seinem Austritt an den beiden Rollen (12, 13) angeordnet sind.

2. Maschine nach Anspruch 1, bei der der den unteren Arbeitskopf (18) tragende Arm horizontal verläuft.

3. Maschine nach Anspruch 1, bei der der Zentralabschnitt der beiden Walzen (12, 13) eine Aushöhlung aufweist, durch die der Durchlauf des Drahtes (8) zwischen diesen selbstreguliert wird, indem dieser gegenüber der Durchlaufrichtung seitlich gleiten kann, wenn seine Geschwindigkeit am Ausgang der Rollen nicht genau mit der Drehgeschwindigkeit der Walzen übereinstimmt.

4. Maschine nach Anspruch 1, bei der der Druck der beiden Rollen (12, 13) auf den Draht (8) in Abhängigkeit vom Durchmesser dieses Drahtes (8) geregelt ist.

5. Maschine nach Anspruch 1, bei der die Drehgeschwindigkeit der beiden Rollen (12, 13) programmierbar und genau steuerbar ist.

6. Maschine nach Anspruch 1, bei der die beiden Rollen (12, 13) angeordnet sind, um als Drahtführung zu dienen.

7. Maschine nach Anspruch 1, bei der die beiden Rollen angeordnet sind, um als Kontakte zum Zuführen des elektrischen Stromes an den Draht (8) zu dienen.
